(19) **Europäisches Patentamt / European Patent Office / Office européen des brevets**

(11) **EP 3 080 565 B1**

(12) **FASCICULE DE BREVET EUROPEEN**

(45) Date de publication et mention
de la délivrance du brevet:
**01.07.2020 Bulletin 2020/27**

(21) Numéro de dépôt: **14821770.6**

(22) Date de dépôt: **02.12.2014**

(51) Int Cl.:
*G01G 19/08* (2006.01)     *G01G 23/01* (2006.01)
*B60G 17/017* (2006.01)     *B60T 8/18* (2006.01)

(86) Numéro de dépôt international:
**PCT/FR2014/053108**

(87) Numéro de publication internationale:
**WO 2015/086949 (18.06.2015 Gazette 2015/24)**

(54) **DISPOSITIF ET PROCÉDÉ D'ESTIMATION DE LA MASSE TOTALE D'UN VÉHICULE AUTOMOBILE A ÉTALONNAGE EMBARQUE DE CAPTEURS DE DÉBATTEMENT DES SUSPENSIONS**

VORRICHTUNG UND VERFAHREN ZUR SCHÄTZUNG DER GESAMTMASSE EINES KRAFTFAHRZEUGS MIT FAHRZEUGINTERNER KALIBRIERUNG VON AUFHÄNGUNGSVERLAGERUNGSSENSOREN

DEVICE AND METHOD FOR ESTIMATING THE TOTAL MASS OF A MOTOR VEHICLE WITH ONBOARD CALIBRATION OF SUSPENSION DISPLACEMENT SENSORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.12.2013 FR 1362479**

(43) Date de publication de la demande:
**19.10.2016 Bulletin 2016/42**

(73) Titulaire: **Renault S.A.S.**
**92100 Boulogne-Billancourt (FR)**

(72) Inventeurs:
- **JACQUES, Anthony**
  **F-78540 Vernouillet (FR)**
- **PITA-GIL, Guillermo**
  **75017 Paris (FR)**

(56) Documents cités:
**EP-A2- 1 470 940**

EP 3 080 565 B1

Printed by Jouve, 75001 PARIS (FR)

**Description**

La présente invention concerne l'estimation de la masse totale d'un véhicule automobile et plus particulièrement l'étalonnage embarqué de capteurs de débattements des suspensions du véhicule automobile.

On entend par la suspension d'un véhicule automobile, l'ensemble comportant un amortisseur, un ressort, c'est-à-dire un élément qui reprend sa forme initiale après une sollicitation, et une tête d'amortisseur.

La connaissance de la masse totale d'un véhicule automobile est nécessaire au bon fonctionnement de nombreux dispositifs embarqués dans le véhicule, notamment les dispositifs de gestion de freinage ou de gestion de la boîte de vitesse automatique. Il est donc souhaitable d'obtenir rapidement une estimation fiable de la masse du véhicule, même lorsque le véhicule est à l'arrêt.

L'estimation de la masse d'un véhicule automobile peut se faire de différentes façons, par exemple par mesure directe du débattement des suspensions à l'aide de capteurs d'assiettes et à partir de la raideur du ressort. En effet, le débattement de la suspension, c'est-à-dire l'amplitude du mouvement, dépend de la raideur du ressort de la suspension et de la charge supportée par le ressort. La mesure du débattement des suspensions de chacune des quatre roues du véhicule permet d'estimer la masse totale du véhicule.

Toutefois, le vieillissement des suspensions au cours du temps entraîne une dégradation de la précision de l'estimation de la masse totale du véhicule automobile calculée à partir des capteurs de débattement. En effet, les ressorts de chacune des suspensions subissent un fluage, c'est-à-dire une déformation irréversible, qui augmente au cours du temps. En d'autres termes, pour une même charge supportée par le ressort, le débattement de la suspension sera décalé, de sorte qu'au cours du temps, la valeur estimée de la masse à partir des capteurs de débattements s'éloignera de plus en plus de la valeur réelle de la masse du véhicule.

Afin de remédier à ce décalage de débattement au cours du temps, la solution actuelle consiste à ré-étalonner la raideur du ressort de la suspension auprès du concessionnaire ou d'un mécanicien disposant du logiciel adéquat.

Ce ré-étalonnage s'avère particulièrement contraignant pour l'utilisateur et ne permet pas d'obtenir une précision constante de l'estimation de la masse.

Il existe également des procédés d'estimation de la masse totale d'un véhicule automobile par application, par exemple, du principe fondamental de la dynamique à un seul instant.

On peut se référer à cet égard au document US 6, 249, 735 qui décrit un procédé d'estimation de l'état de chargement d'un véhicule en fonction du couple du moteur mesuré et de l'accélération du véhicule calculée par approximation discrète de la dérivée de la vitesse et par filtrage. Un tel procédé ne permet pas d'obtenir une estimation de la masse suffisamment fiable et robuste.

On peut également se référer au document FR 2 857 090 qui décrit un procédé d'estimation de la masse reposant sur un algorithme de moindres carrés récursifs en utilisant l'accélération du véhicule. Toutefois, un tel procédé d'estimation ne permet pas d'estimer rapidement la masse du véhicule automobile. On peut également se référer au document EP 1 470 940.

De plus, les procédés d'estimation de la masse d'un véhicule automobile par application du principe fondamental de la dynamique nécessitent un certain temps de roulage avant de converger vers une estimation précise de la masse totale du véhicule.

La présente invention a donc pour objet de remédier à ces inconvénients.

Le but de l'invention est donc de fournir un système embarqué pour véhicule automobile permettant de ré-étalonner la raideur du ressort de la suspension du véhicule et ainsi d'obtenir une information précise sur la masse totale du véhicule automobile, même lorsque le véhicule est à l'arrêt.

L'invention concerne un dispositif d'estimation de la masse totale d'un véhicule automobile comme décrit dans la revendication 1.

Le dispositif d'estimation comprend un système de ré-étalonnage des capteurs de débattement embarqué sur le véhicule automobile.

Le système de ré-étalonnage des capteurs de débattement peut comprendre un module d'estimation du fluage subi par chacun des trains avant et arrière du véhicule automobile en fonction de la moyenne des écarts calculée par le module de comparaison statistique.

Avantageusement, le système de ré-étalonnage des capteurs de débattement comprend un module de calcul de la valeur d'étalonnage à appliquer à chacun des capteurs de débattement.

Par exemple, les paramètres dynamiques comprennent toutes les données relatives au fonctionnement du véhicule en roulage.

La masse totale du véhicule estimée par le deuxième module d'estimation correspond, par exemple, à la somme des valeurs de masse estimées respectivement au train avant et au train arrière du véhicule.

Selon un deuxième aspect, l'invention concerne un procédé d'estimation de la masse totale d'un véhicule automobile comprenant une première étape d'estimation de la masse totale du véhicule automobile en fonction des paramètres dynamiques du véhicule et une deuxième étape d'estimation de la masse totale du véhicule en fonction de valeurs du débattement de chacune des suspensions du véhicule mesurées par des capteurs de débattement.

Le procédé d'estimation comprend une troisième étape de ré-étalonnage des capteurs de débattement embarqué sur le véhicule automobile.

Selon l'invention l'étape de ré-étalonnage des capteurs de débattement comprend une étape de comparaison statistique des valeurs de masse totale estimées respectivement aux première et deuxième étapes.

L'étape de ré-étalonnage des capteurs de débattement peut comprendre une étape d'estimation du fluage subi par chacun des trains avant et arrière du véhicule automobile en fonction de la moyenne des écarts calculée à l'étape de comparaison statistique.

L'étape de ré-étalonnage des capteurs de débattement peut comprendre une étape de calcul de la valeur d'étalonnage à appliquer à chacun des capteurs de débattement.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 représente schématiquement le dispositif d'estimation de la masse totale d'un véhicule selon l'invention; et
- la figure 2 illustre les étapes du procédé d'estimation de la masse totale d'un véhicule selon l'invention.

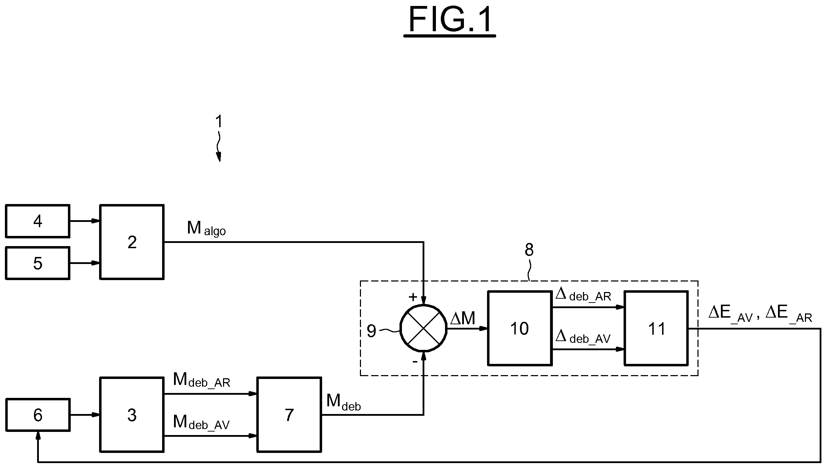

Le dispositif d'estimation de la masse totale d'un véhicule automobile (non représenté), selon la figure 1, comporte une unité de commande électronique 1 destinée, par exemple, à piloter un calculateur (non représenté), par exemple de la transmission automatique, de l'estimation de la pression des pneumatiques ou de tout autre dispositif du véhicule automobile nécessitant la connaissance de la masse totale du véhicule.

Le dispositif d'estimation de la masse totale comprend un premier module 2 d'estimation de la masse totale $M_{algo}$ du véhicule automobile en fonction des paramètres dynamiques du véhicule et un deuxième module 3 d'estimation de la masse totale $M_{deb\_Av}$, $M_{deb\_AR}$, du véhicule en fonction de valeurs mesurées du débattement de chacune des suspensions du véhicule.

On entend par paramètres dynamiques, toutes les données relatives au fonctionnement du véhicule en roulage, telles que l'angle du volant, la vitesse de lacet, la vitesse du véhicule, l'accélération instantanée etc...

Le premier module 2 d'estimation de la masse totale $M_{algo}$ du véhicule automobile reçoit en entrée des données disponibles sur le réseau 4 du véhicule, appelé « Controller Area Network » en termes anglo-saxons, telles que par exemple les informations fournies par le dispositif de contrôle dynamique de conduite, communément dénommé ESC pour « Electronic Stability Control ».

Le premier module 2 d'estimation de la masse totale $M_{algo}$ du véhicule automobile comprend par exemple un algorithme estimant la masse totale du véhicule en fonction des paramètres dynamiques et d'une base de données 5 contenant des profils de roulage.

En variante, le premier module 2 d'estimation de la masse totale du véhicule automobile peut comprendre un algorithme utilisant la deuxième loi de Newton afin de calculer théoriquement les estimations de masses instantanées du véhicule.

Le deuxième module 3 d'estimation de la masse totale $M_{deb\_AV}$, $M_{deb\_AR}$ du véhicule comprend des capteurs 6 associés à chacune des roues du véhicule (non représentées) et permettant de mesurer le débattement des suspensions (non représentées) respectivement du train avant et du train arrière, c'est-à-dire l'amplitude du mouvement. La masse totale $M_{deb}$ du véhicule, correspondant à la somme réalisée par le module de sommation 7, des valeurs estimées de masse $M_{deb\_AV}$, $M_{deb\_AR}$ par trains avant et arrière du véhicule, est ainsi estimée en fonction de la mesure des débattements des suspensions et de la raideur du ressort de la suspension correspondante $K_{AV}$, $K_{AR}$.

Afin de remédier au problème de fluage des suspensions au cours du temps entraînant une dégradation de la précision de la valeur de la masse totale du véhicule estimée à partir des capteurs de débattement, le dispositif d'estimation 1 de la masse totale du véhicule comprend un système de ré-étalonnage 8 des capteurs de débattement embarqué sur le véhicule automobile.

Le système de ré-étalonnage 8 des capteurs de débattement 6 comprend un module de comparaison statistique 9 des valeurs de masse totale $M_{algo}$, $M_{deb}$ estimées respectivement par le premier module 2 et le deuxième module 3 d'estimation de la masse.

On obtient ainsi une moyenne des écarts $\Delta M$ entre la masse totale $M_{algo}$ estimée par le premier module d'estimation 2 et la masse totale $M_{deb}$ estimée par le deuxième module d'estimation 3.

Le système de ré-étalonnage 8 des capteurs de débattement comprend également un module 10 d'estimation du fluage $\Delta_{deb\_AV}$, $\Delta_{deb\_AR}$ subi par chacun des trains avant et arrière du véhicule automobile. Le module d'estimation du fluage 10 transmet les valeurs estimées du fluage subi par chaque train du véhicule à un module de calcul 11 de la valeur d'étalonnage à appliquer à chacun des capteurs de débattement 6.

Les raideurs des ressorts des suspensions n'étant pas constantes en fonction de la masse, le fluage aura donc un impact différent, en fonction de l'état de charge, sur l'écart entre les deux valeurs de masse totale estimées par chacun des premier et deuxième modules d'estimation de la masse.

Ainsi, pour un premier état de charge, on obtient l'équation suivante :

$$M_{a\lg o}{}^{1} - M_{deb}{}^{1} = \Delta_{AV} + \Delta_{AR} \qquad \textbf{\textit{(Eq.1)}}$$

Avec :

$M_{algo}{}^{1}$, la masse totale du véhicule estimée par l'algorithme de roulage du premier module d'estimation 2, à un premier état de charge, exprimée en Kg ;

$M_{deb}{}^{1}$, la masse totale du véhicule estimée par la mesure des débattements du deuxième module d'estimation 3, à un premier état de charge, exprimée en Kg ;

$\Delta_{AV}$, l'erreur d'estimation de masse due au fluage sur le train avant ; et

$\Delta_{AR}$, l'erreur d'estimation de masse due au fluage sur le train arrière.

La masse totale estimée par le deuxième module d'estimation 3 correspond à la somme des masses estimées en fonction des débattements des suspensions mesurés par les capteurs de débattements du train avant et arrière selon l'équation suivante :

$$M_{deb}{}^{1} = M_{deb\_AV}{}^{1} + M_{deb\_AR}{}^{1} \qquad \textbf{\textit{(Eq.2)}}$$

Avec :

$M_{deb\_AV}{}^{1}$, la masse du véhicule estimée au train avant par la mesure des débattements du deuxième module d'estimation 3, à un premier état de charge, exprimée en Kg; et

$M_{deb\_AR}{}^{1}$, la masse du véhicule estimée au train arrière par la mesure des débattements du deuxième module d'estimation 3, à un premier état de charge, exprimée en Kg.

En posant :

$$\Delta_{AV} = \Delta_{deb\_AV} \times K_{AV}{}^{1} \qquad \textbf{\textit{(Eq.3)}}$$

$$\Delta_{AR} = \Delta_{deb\_AR} \times K_{AR}{}^{1} \qquad \textbf{\textit{(Eq.4)}}$$

Avec :

$\Delta_{deb\_AV}$, le fluage de la suspension du train avant, exprimée en mètres ;

$\Delta_{deb\_AR}$, le fluage de la suspension du train avant, exprimée en mètres ;

$K_{AV}{}^{1}$, la raideur du ressort de la suspension du train avant, à un premier état de charge, exprimée en N/m ;

$K_{AR}{}^{1}$, la raideur du ressort de la suspension du train arrière, à un premier état de charge exprimée en N/m ;

En remplaçant les équations 2, 3 et 4 dans l'équation 1, on obtient :

$$M_{a\lg o}{}^{1} - (M_{deb\_AV}{}^{1} + M_{deb\_AR}{}^{1}) = \Delta_{deb\_AV} \times K_{AV}{}^{1} + \Delta_{deb\_AR} \times K_{AR}{}^{1} \qquad \textbf{\textit{(Eq.5)}}$$

De manière identique, pour un deuxième état de charge, on obtient l'équation suivante :

$$M_{a\lg o}{}^{2} - M_{deb}{}^{2} = \Delta_{AV} + \Delta_{AR} \qquad \textbf{\textit{(Eq.6)}}$$

Soit :

$$M_{a\lg o}{}^{2} - (M_{deb\_AV}{}^{2} + M_{deb\_AR}{}^{2}) = \Delta_{deb\_AV} \times K_{AV}{}^{2} + \Delta_{deb\_AR} \times K_{AR}{}^{2} \textbf{\textit{(Eq.7)}}$$

Avec :

$M_{algo}{}^2$, la masse totale du véhicule estimée par l'algorithme de roulage du premier module d'estimation 2, à un deuxième état de charge, exprimée en Kg ;

$M_{deb}{}^2$, la masse totale du véhicule estimée par la mesure des débattements du deuxième module d'estimation 3, à un deuxième état de charge, exprimée en Kg ;

$M_{deb\_AV}{}^2$, la masse du véhicule estimée au train avant par la mesure des débattements du deuxième module d'estimation 3, à un deuxième état de charge, exprimée en Kg ;

$M_{deb\_AR}{}^2$, la masse du véhicule estimée arrière par la mesure des débattements du deuxième module d'estimation 3, à un deuxième état de charge, exprimée en Kg ;

$K_{AV}{}^2$, la raideur du ressort de la suspension du train avant, à un deuxième état de charge exprimée en N.m ; et

$K_{AR}{}^2$, la raideur du ressort de la suspension du train arrière, à un deuxième état de charge exprimée en N.m.

En combinant les équations 5 et 7, on obtient la valeur du fluage $\Delta_{deb\_AR}$ sur le train arrière :

$$\Delta_{deb\_AR} = \frac{\Delta M^2 \times K_{AV}{}^1 - \Delta M^1 \times K_{AV}{}^2}{9{,}81 \times (K_{AR}{}^2 \times K_{AV}{}^1 - K_{AR}{}^1 \times K_{AV}{}^2)} \qquad \textit{(Eq.8)}$$

Avec :

$$\Delta M^2 = M_{algo}{}^2 - \Delta_{deb}{}^2 \text{ et } \Delta M^1 = M_{algo}{}^1 - \Delta_{deb}{}^1.$$

En réinjectant la valeur du fluage subi par le train arrière $\Delta_{deb\_AR}$ dans l'équation 5, on obtient le fluage subi par le train avant :

$$\Delta_{deb\_AV} = \frac{\Delta M^2 \times K_{AR}{}^1 - \Delta M^1 \times K_{AR}{}^2}{9{,}81 \times (K_{AV}{}^2 \times K_{AR}{}^1 - K_{AV}{}^1 \times K_{AR}{}^2)} \qquad \textit{(Eq.9)}$$

Le module de calcul 11 détermine les valeurs d'étalonnage $\Delta E_{\_AV}$, $\Delta E_{\_AR}$ à appliquer à chacun des capteurs 6 respectivement associé au train avant et au train arrière de la suspension.

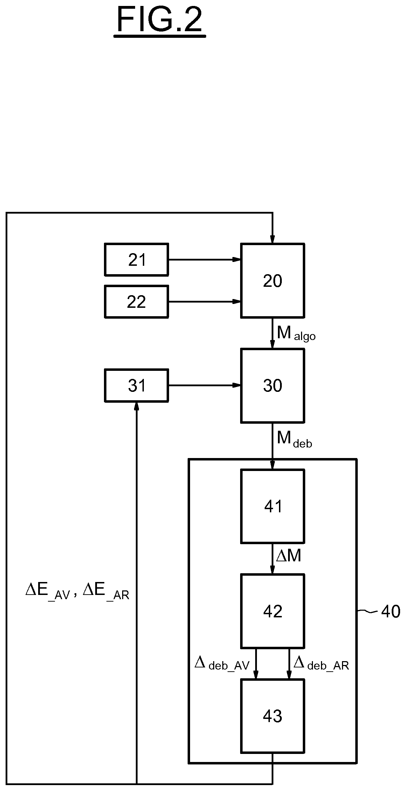

Tel qu'illustré sur la figure 2, le procédé d'estimation de la masse totale d'un véhicule automobile (non représenté) comprend trois étapes principales 20, 30, 40 : une première étape principale 20 d'estimation de la masse totale $M_{algo}$ du véhicule automobile en fonction des paramètres dynamiques du véhicule, une deuxième étape principale 30 d'estimation de la masse totale $M_{algo}$ du véhicule en fonction de valeurs mesurées du débattement de chacune des suspensions du véhicule et une troisième étape principale 40 de ré-étalonnage des capteurs de débattement embarqué sur le véhicule automobile.

On estime, à l'étape 20, la masse totale $M_{algo}$ en fonction des paramètres dynamiques du véhicule roulant par exemple disponibles sur le réseau 21 du véhicule et/ou en utilisant un algorithme estimant la masse totale du véhicule en fonction des paramètres dynamiques et d'une base de données 22 contenant des profils de roulage.

On estime ensuite, à l'étape 30, la masse totale $M_{deb}$ du véhicule, correspondant à la somme des valeurs estimées de masse $M_{deb\_AV}$, $M_{deb\_AR}$ respectivement du train avant et du train arrière du véhicule, en fonction des mesures de débattement des suspensions mesurées par les capteurs de débattement 31 et de la raideur du ressort de la suspension correspondante $K_{AV}$, $K_{AR}$.

Afin de remédier au problème de fluage des suspensions au cours du temps entraînant une dégradation de la précision de la valeur de la masse totale du véhicule estimée à partir des capteurs de débattement, on ré-étalonne, à l'étape 40, les capteurs de débattement embarqués sur le véhicule automobile.

L'étape 40 de ré-étalonnage des capteurs de débattement comprend une étape 41 de comparaison statistique des valeurs de masse totale $M_{algo}$, $M_{deb}$ estimées respectivement aux étapes 20 et 30.

On obtient ainsi une moyenne des écarts $\Delta M$ entre la masse totale $M_{algo}$ estimée à l'étape 20 et la masse totale $M_{deb}$ estimée à l'étape 30.

L'étape 40 de ré-étalonnage des capteurs de débattement comprend également une étape 42 d'estimation du fluage $\Delta_{deb\_AV}$, $\Delta_{deb\_AR}$ subi par chacun des trains avant et arrière du véhicule automobile calculées selon les équations 8 et 9, et une étape 43 de calcul de la valeur d'étalonnage $\varDelta E_{\_AV}$, $\varDelta E_{\_AR}$ à appliquer à chacun des capteurs de débattement.

Ainsi, la masse totale du véhicule peut être estimée de manière fiable et rapide.

De plus, il n'est pas nécessaire de faire ré-étalonner les capteurs de débattement puisque un système de ré-étalonnage est embarqué directement sur le véhicule automobile.

## Revendications

1. Dispositif d'estimation de la masse totale d'un véhicule automobile comprenant un premier module (2) d'estimation de la masse totale ($M_{algo}$) du véhicule automobile en fonction des paramètres dynamiques du véhicule et un deuxième module (3) d'estimation de la masse totale ($M_{deb}$) du véhicule en fonction de valeurs du débattement de chacune des suspensions du véhicule mesurées par des capteurs de débattement (6), **caractérisé en ce que** le dispositif comprend un système de ré-étalonnage (8) des capteurs de débattement embarqué sur le véhicule automobile et le système de ré-étalonnage (8) des capteurs de débattement (6) comprend un module de comparaison statistique (9) des valeurs de masse totale ($M_{algo}$, $M_{deb}$) estimées respectivement par le premier module (2) et le deuxième module (3) d'estimation de la masse.

2. Dispositif d'estimation de la masse totale d'un véhicule automobile selon la revendication 1, dans lequel le système de ré-étalonnage (8) des capteurs de débattement (6) comprend un module (10) d'estimation du fluage ($\varDelta_{deb\_AV}$, $\varDelta_{deb\_AR}$) subi par chacun des trains avant et arrière du véhicule automobile en fonction de la moyenne des écarts ($\varDelta M$) calculée par le module de comparaison statistique (9).

3. Dispositif d'estimation de la masse totale d'un véhicule automobile selon la revendication 2, dans lequel le système de ré-étalonnage (8) des capteurs de débattement (6) comprend un module de calcul (11) de la valeur d'étalonnage ($\varDelta E_{\_AV}$, $\varDelta E_{\_AR}$) à appliquer à chacun des capteurs de débattement (6).

4. Dispositif d'estimation de la masse totale d'un véhicule automobile selon l'une quelconque des revendications précédentes, dans lequel les paramètres dynamiques comprennent toutes les données relatives au fonctionnement du véhicule en roulage.

5. Dispositif d'estimation de la masse totale d'un véhicule automobile selon l'une quelconque des revendications précédentes, dans lequel la masse totale ($M_{deb}$) du véhicule estimée par le deuxième module (3) d'estimation correspond à la somme des valeurs de masse ($M_{deb\_AV}$, $M_{deb\_AR}$) estimées respectivement au train avant et au train arrière du véhicule.

6. Procédé d'estimation de la masse totale d'un véhicule automobile comprenant une première étape (20) d'estimation de la masse totale ($M_{algo}$) du véhicule automobile en fonction des paramètres dynamiques du véhicule et une deuxième étape (30) d'estimation de la masse totale ($M_{deb}$) du véhicule en fonction de valeurs du débattement de chacune des suspensions du véhicule mesurées par des capteurs de débattement, **caractérisé en ce que**, le procédé comprend une troisième étape (40) de ré-étalonnage des capteurs de débattement embarqué sur le véhicule automobile et l'étape (40) de ré-étalonnage des capteurs de débattement comprend une étape (41) de comparaison statistique des valeurs de masse totale ($M_{algo}$, $M_{deb}$) estimées respectivement aux première et deuxième étapes (20, 30).

7. Procédé d'estimation de la masse totale d'un véhicule automobile selon la revendication 6, dans lequel l'étape (40) de ré-étalonnage des capteurs de débattement comprend une étape (42) d'estimation du fluage ($\varDelta_{deb\_AV}$, $\varDelta_{deb\_AR}$) subi par chacun des trains avant et arrière du véhicule automobile en fonction de la moyenne des écarts ($\varDelta M$) calculée à l'étape (41) de comparaison statistique.

8. Procédé d'estimation de la masse totale d'un véhicule automobile selon la revendication 7, dans lequel l'étape (40) de ré-étalonnage des capteurs de débattement comprend une étape (43) de calcul de la valeur d'étalonnage ($AE_{\_AV}$, $\varDelta E_{\_AR}$) à appliquer à chacun des capteurs de débattement.

## Patentansprüche

1. Vorrichtung zur Schätzung der Gesamtmasse eines Kraftfahrzeugs, umfassend ein erstes Modul (2) zur Schätzung der Gesamtmasse ($M_{algo}$) des Kraftfahrzeugs in Abhängigkeit von den dynamischen Parametern des Fahrzeugs und ein zweites Modul (3) zur Schätzung der Gesamtmasse ($M_{deb}$) des Fahrzeugs in Abhängigkeit von durch Federwegsensoren (6) gemessenen Werten des Federwegs jeder der Aufhängungen des Fahrzeugs,
**dadurch gekennzeichnet, dass** die Vorrichtung ein System (8) zur Rekalibrierung der Federwegsensoren an Bord des Kraftfahrzeugs umfasst und
das System (8) zur Rekalibrierung der Federwegsensoren (6) ein Modul (9) zum statistischen Vergleich der durch das erste Modul (2) bzw. das zweite Modul (3) zur Masseschätzung geschätzten Gesamtmassenwerte ($M_{algo}$, $M_{deb}$) umfasst.

2. Vorrichtung zur Schätzung der Gesamtmasse eines Kraftfahrzeugs nach Anspruch 1, wobei das System (8) zur Rekalibrierung der Federwegsensoren (6) ein Modul (10) zur Schätzung des Kriechens ($\Delta_{deb\_AV}$, $\Delta_{deb\_AR}$), das sowohl die Vorder- als auch die Hinterachse des Kraftfahrzeugs erfährt, in Abhängigkeit von dem durch das Modul (9) zum statistischen Vergleich berechneten Mittelwert der Abweichungen ($\Delta M$) umfasst.

3. Vorrichtung zur Schätzung der Gesamtmasse eines Kraftfahrzeugs nach Anspruch 2, wobei das System zur Rekalibrierung (8) der Federwegsensoren (6) ein Modul (11) zur Berechnung des auf jeden der Federwegsensoren (6) anzuwendenden Kalibrierungswerts ($\Delta E_{\_AV}$, $\Delta E_{\_AR}$) umfasst.

4. Vorrichtung zur Schätzung der Gesamtmasse eines Kraftfahrzeugs nach einem der vorangehenden Ansprüche, wobei die dynamischen Parameter alle Daten umfassen, die sich auf den Fahrbetrieb des Fahrzeugs beziehen.

5. Vorrichtung zur Schätzung der Gesamtmasse eines Kraftfahrzeugs nach einem der vorangehenden Ansprüche, wobei die durch das zweite Schätzmodul (3) geschätzte Gesamtmasse ($M_{deb}$) des Fahrzeugs der Summe der an der Vorderachse bzw. der Hinterachse des Fahrzeugs geschätzten Massenwerte ($M_{deb\_AV}$, $M_{deb\_AR}$) entspricht.

6. Verfahren zur Schätzung der Gesamtmasse eines Kraftfahrzeugs, umfassend einen ersten Schritt (20) zur Schätzung der Gesamtmasse ($M_{algo}$) des Kraftfahrzeugs in Abhängigkeit von den dynamischen Parametern des Fahrzeugs und einen zweiten Schritt (30) zur Schätzung der Gesamtmasse ($M_{deb}$) des Fahrzeugs in Abhängigkeit von durch Federwegsensoren gemessenen Werten des Federwegs jeder der Aufhängungen des Fahrzeugs,
**dadurch gekennzeichnet, dass** das Verfahren einen dritten Schritt (40) der Rekalibrierung der Federwegsensoren an Bord des Kraftfahrzeugs umfasst und
der Schritt (40) der Rekalibrierung der Federwegsensoren einen Schritt (41) des statistischen Vergleichs der im ersten bzw. im zweiten Schritt (20, 30) geschätzten Gesamtmassenwerte ($M_{algo}$, $M_{deb}$) umfasst.

7. Verfahren zur Schätzung der Gesamtmasse eines Kraftfahrzeugs nach Anspruch 6, wobei der Schritt (40) der Rekalibrierung der Federwegsensoren einen Schritt (42) zur Schätzung des Kriechens ($\Delta_{deb\_AV}$, $\Delta_{deb\_AR}$), das jede der Vorder- und Hinterachse des Kraftfahrzeugs erfährt, in Abhängigkeit von dem im Schritt (41) des statistischen Vergleichs berechneten Mittelwert der Abweichungen ($\Delta M$) umfasst.

8. Verfahren zur Schätzung der Gesamtmasse eines Kraftfahrzeugs nach Anspruch 7, wobei der Schritt (40) der Rekalibrierung der Federwegsensoren einen Schritt (43) der Berechnung des auf jeden der Federwegsensoren anzuwendenden Kalibrierungswerts ($\Delta E_{\_AV}$, $\Delta E_{\_AR}$) umfasst.

**Claims**

1. Device estimating the total mass of a motor vehicle comprising a first module (2) for estimating the total mass ($M_{algo}$) of the motor vehicle as a function of the dynamic parameters of the vehicle and a second module (3) for estimating the total mass ($M_{deb}$) of the vehicle as a function of values of the displacement of each of the suspensions of the vehicle measured by displacement sensors (6),
**characterized in that** the device comprises a system (8) for recalibrating the displacement sensors embedded on the motor vehicle and
the system (8) for recalibrating the displacement sensors (6) comprises a module (9) for statistically comparing the total mass values ($M_{algo}$, $M_{deb}$) estimated respectively by the first module (2) and the second module (3) for estimating the mass.

2. Device for estimating the total mass of a motor vehicle according to Claim 1, wherein the system (8) for recalibrating the displacement sensors (6) comprises a module (10) for estimating the creep ($\Delta_{deb\_AV}$, $\Delta_{deb\_AR}$) undergone by each of the front and rear ends of the motor vehicle as a function of the average of the deviations ($\Delta M$) calculated by the statistical comparison module (9).

3. Device for estimating the total mass of a motor vehicle according to Claim 2, in which the system (8) for recalibrating the displacement sensors (6) comprises a module (11) for calculating the calibration value ($\Delta E_{\_AV}$, $\Delta E_{\_AR}$) to be applied to each of the displacement sensors (6) .

4. Device for estimating the total mass of a motor vehicle according to any one of the preceding claims, wherein the dynamic parameters comprise all the data relating to the operation of the vehicle when moving.

5. Device for estimating the total mass of a motor vehicle according to any one of the preceding claims, wherein the total mass ($M_{deb}$) of the vehicle estimated by the second estimation module (3) corresponds to the sum of the mass values ($M_{deb\_AV}$, $M_{deb\_AR}$) estimated respectively on the front end and on the rear end of the vehicle.

6. Method for estimating the total mass of a motor vehicle comprising a first step (20) of estimation of the total mass ($M_{algo}$) of the motor vehicle as a function of the dynamic parameters of the vehicle and a second step (30) of estimation of the total mass ($M_{deb}$) of the vehicle as a function of values of the displacement of each of the suspensions of the vehicle measured by displacement sensors,
**characterized in that**, the method comprises a third step (40) of recalibration of the displacement sensors embedded on the motor vehicle and
the step (40) of recalibration of the displacement sensors comprises a step (41) of statistical comparison of the total mass values ($M_{algo}$, $M_{deb}$) estimated respectively in the first and second steps (20, 30).

7. Method for estimating the total mass of a motor vehicle according to Claim 6, wherein the step (40) of recalibration of the displacement sensors comprises a step (42) of estimation of the creep ($\Delta_{deb\_AV}$, $\Delta_{deb\_AR}$) undergone by each of the front and rear ends of the motor vehicle as a function of the average of the deviations ($\Delta M$) calculated in the statistical comparison step (41).

8. Method for estimating the total mass of the motor vehicle according to Claim 7, wherein the step (40) of recalibration of the displacement sensors comprises a step (43) of calculation of the calibration value ($\Delta E_{\_AV}$, $\Delta E_{\_AR}$) to be applied to each of the displacement sensors.

## FIG.1

# FIG.2

```
                    ┌─────┐              ┌─────────┐
                    │ 21  │─────────────→│         │
                    └─────┘              │   20    │
                    ┌─────┐              │         │
                    │ 22  │─────────────→│         │
                    └─────┘              └─────────┘
                                              │ M_algo
                                              ↓
                    ┌─────┐              ┌─────────┐
                    │ 31  │─────────────→│   30    │
                    └─────┘              └─────────┘
                                              │ M_deb
                                              ↓
                                  ┌──────────────────────┐
                                  │     ┌─────────┐      │
                                  │     │   41    │      │
                                  │     └─────────┘      │
                                  │          │ ΔM        │
                                  │          ↓           │
                                  │     ┌─────────┐      │ ~ 40
        ΔE_AV , ΔE_AR             │     │   42    │      │
                                  │     └─────────┘      │
                                  │  Δ_deb_AV │ Δ_deb_AR │
                                  │       ↓   ↓          │
                                  │     ┌─────────┐      │
                                  │     │   43    │      │
                                  │     └─────────┘      │
                                  └──────────────────────┘
```

## RÉFÉRENCES CITÉES DANS LA DESCRIPTION

**Documents brevets cités dans la description**

- US 6249735 B
- FR 2857090
- EP 1470940 A